# EUROPÄISCHE PATENTANMELDUNG

(11) **EP 0 597 301 A1**
(43) Veröffentlichungstag der Anmeldung: **18.05.1994**
(21) Anmeldenummer: 93117135.9
(22) Anmeldetag: 22.10.1993
(51) Int. Cl.: C08G 73/16

(54) **Thermoplastische Polyesterimide aus Trimellitsäure, Propandiphenol und einem aromatischen Diamin mit verbesserten mechanischen Eigenschaften, deren Herstellung und Verwendung**

(30) Priorität: 10.11.1992 AT 2210/92
(71) Anmelder: DSM Chemie Linz GmbH, 4021 Linz (AT)
(72) Erfinder: Horacek, Heinrich, Dr., A-4048 Puchenau (AT)
(74) Vertreter: Kunz, Ekkehard, Dr.

(57) **Zusammenfassung**

Thermoplastische Polyesterimide mit verbesserten mechanischen Eigenschaften, dadurch gekennzeichnet, daß sie aus sich wiederholenden Einheiten der Formel I 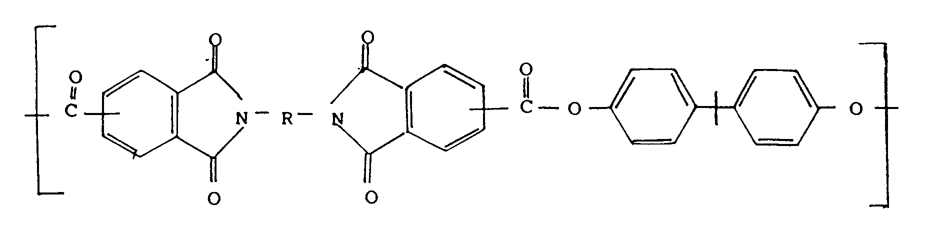
bestehen, worin R einen 2,4-Tolylen-, 2,6-Tolylen-, 2,5-Bis(4-phenylenthio)-thiadiazol- oder einen 1,4-Bis(phenylenthio)diphenylsulfonrest bedeutet, ein Verfahren zur Herstellung, sowie Verwendung zur Herstellung von technischen Kunststoffteilen.

## Beschreibung

Die Erfindung betrifft thermoplastische Polyesterimide aus Trimellitsäure, Propandiphenol und einem aromatischen Diamin mit verbesserten, mechanischen Eigenschaften, deren Herstellung und Verwendung.

Die bis heute technisch wichtigsten thermostabilen Polymere sind vollaromatische Polyimide, die aber in der Regel weder schmelzbar noch löslich und daher nur aufwendig und teuer zu verarbeiten sind.
Die etwas weniger thermostabilen aromatischen Polyamide sind ebenfalls unschmelzbar und in den meisten organischen Lösungsmitteln unlöslich oder nur wenig löslich, so daß ihre Verarbeitung aus Lösung zu Fasern oder Folien mit großen Schwierigkeiten verbunden ist.
Die schwierige Verarbeitbarkeit verteuert diese thermostabilen Polymere erheblich und schließt sie aus einer Reihe von Anwendungsgebieten aus.
Durch den Einbau von flexiblen Kettenelementen(-CH₂-,-O-,-S-,-CO- oder sterisch anspruchsvollen Gruppen wurde zwar die Verarbeitbarkeit der Polymere verbessert, jedoch mußte man eine meist beträchtliche Einbuße an Thermostabilität hinnehmen.
Hierher gehören auch Polyamidimide und Polyesterimide, in denen aromatische Amid- und Imid- bzw. Ester- und Imidgruppen statistisch angeordnet sind, die meist löslich sind oder thermoplastische Eigenschaften besitzen, aber ebenfalls eine geringe Thermostabilität aufweisen (US-PS-3,895,064). Die eigentliche Problemlösung auf dem Gebiet der thermoplastischen Polymere liegt also noch immer auf der Entwicklung von neuen Produkten mit hoher Thermostabilität, guter Verarbeitbarkeit und guten mechanischen Eigenschaften.

Aufgabe der vorliegenden Erfindung war es, neue thermoplastische Polyesterimide zu entwickeln, die bei hoher Thermostabilität in der cyclisierten Form löslich und/oder schmelzbar und somit nach herkömmlichen Methoden einfach verarbeitbar sind und die verbesserte mechanische Eigenschaften besitzen.

Es wurde nun gefunden, daß diese Aufgabe mit Hilfe von Polyesterimiden, die aus Trimellitsäure, Propandiphenol und einem aromatischen Diamin aufgebaut sind, gelöst werden kann.

Gegenstand der Erfindung sind daher thermoplastische Polyesterimide mit verbesserten mechanischen Eigenschaften, die dadurch gekennzeichnet sind, daß sie aus sich wiederholenden Einheiten der Formel I 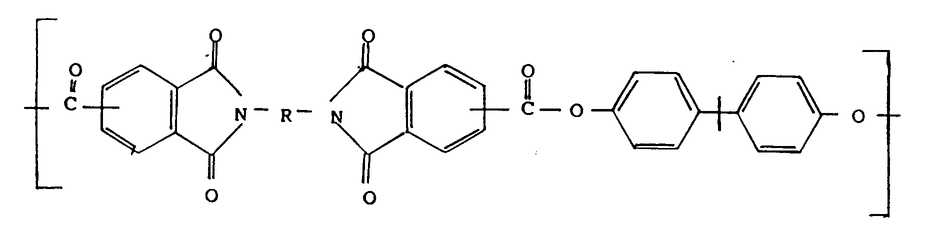
bestehen, worin R einen 2,4-Tolylen-, 2,6-Tolylen-, 2,5-Bis(4-phenylenthio)-thiadiazol- oder 1,4-Bis(phenylenthio)diphenylsulfonrest bedeutet.

Ein weiterer Gegenstand der Erfindung ist ein Verfahren zur Herstellung von Polyesterimiden der Formel I, 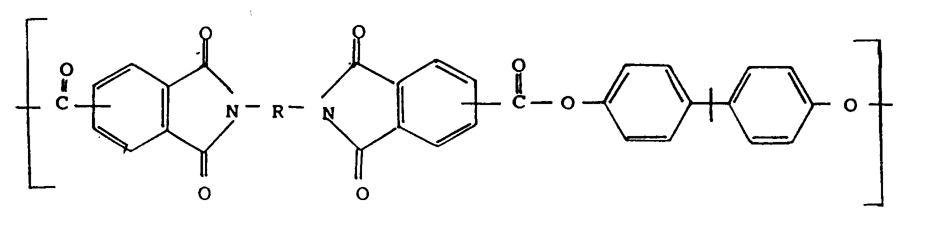
in der R wie oben definiert ist, das dadurch gekennzeichnet ist, daß Trimellitsäure bzw. Trimellitsäureanhydrid, -anhydridchlorid, -anhydridester oder Trimellitsäureester in einem unter den Reaktionsbedingungen inerten Verdünnungsmittel mit 2,4- oder 2,6-Tolylendiamin, 2,5-Bis(4-aminophenylthio)-thiadiazol oder mit 1,4-Bis-(4-aminophenylthio)diphenylsulfon unter Wasserabspaltung zu einer Diimiddicarbonsäure der Formel II 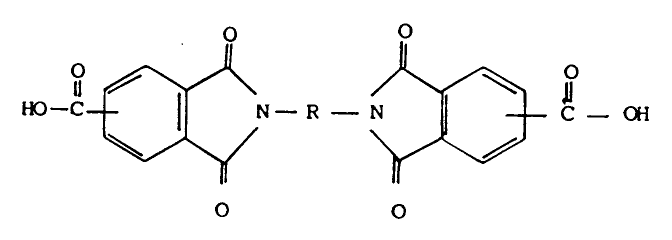
in der R wie oben definiert ist, umgesetzt wird und anschließend die Diimiddicarbonsäure durch Reaktion mit Propandiphenol, gegebenenfalls in Gegenwart eines Katalysators, unter Wasserabspaltung in ein thermoplastisches Polyesterimid übergeführt wird.

Im ersten Reaktionsschritt werden die aromatischen Diamine mit Trimellitsäure, Trimellitsäureanhydrid, Trimellitsäureanhydridchlorid, Trimellitsäureester oder Trimellitsäureanhydridmethyl-, -ethyl-, oder -isopropylester umgesetzt. Bevorzugt wird Trimellitsäureanhydrid eingesetzt.

Das Diamin und die Trimellitsäure oder die oben angeführten Trimellitsäurederivate werden dabei vorzugsweise in einem Molverhältnis von etwa 1 : 2 eingesetzt, ein geringer Überschuß einer der Reaktionspartner kann jedoch auch verwendet werden.

Die Umsetzung erfolgt vorzugsweise in einem unter den Reaktionsbedingungen inerten Verdünnungsmittel, wie z.B. N-Methylpyrrolidon (NMP), Dimethylformamid (DMF), Dimethylacetamid (DMA), Dimethylsulfoxid (DMSO), Tetramethylharnstoff oder Hexamethylenphosphorsäuretriamid (HMP).
Bevorzugt wird NMP oder DMF als Verdünnungsmittel eingesetzt.

Die Reaktionstemperatur kann je nach verwendeten Ausgangsstoffen und gewünschten Endprodukten innerhalb eines weiten Bereiches schwanken. Bei Verwendung der reaktiven Trimellitsäureanhydriden bzw. -anhydridchloriden liegen die Temperaturen etwa zwischen -30 und +30 °C, bei Einsatz der weniger reaktiven Säure bzw. Ester werden Temperaturen bis etwa 150 °C angewandt.

Die bei dieser Umsetzung intermediär entstehenden Amidsäuren werden durch etwa 0,5 bis 3-stündiges, vorzugsweise 1- bis 2-stündiges Erhitzen auf Rückflußtemperatur cyclisiert und das bei der Reaktion entstehende Wasser abdestilliert. Die so gebildeten Diimiddicarbonsäuren können dann durch übliche Methoden, wie z.B. Ausfällen oder Kristallisation isoliert werden, gegebenenfalls können sie anschließend durch übliche Methoden, wie z.B. Umkristallisieren oder Umfällen gereinigt werden.

Werden die Diimiddicarbonsäuren isoliert, so werden sie dann im zweiten Reaktionsschritt mit einer äquivalenten Menge Propandiphenol in Gegenwart eines Katalysators, wie z.B. eines Titanats wie Tetraisopropyltitanat oder Tetrabutyltitanat aufgeschmolzen. Bevorzugt wird Tetraisopropyltitanat als Katalysator eingesetzt. Die Katalysatormenge beträgt etwa 0,1 bis 2 Gew.%, vorzugsweise 0,5 bis 1,0 Gew.%.

Die Reaktionstemperatur liegt dabei etwa zwischen 110 und 190 °C, vorzugsweise zwischen 140 und 170 °C. Das freigesetzte Wasser wird wiederum abdestilliert, das so gewonnene Polyesterimid kann gegebenenfalls durch übliche Methoden, wie etwa Umkristallisieren, Chromatographie oder Umfällen gereinigt werden.

Die im ersten Reaktionsschritt gebildete Diimiddicarbonsäure kann jedoch auch ohne Isolation weiterverarbeitet werden. In diesem Fall wird die äquivalente Menge an Propandiphenol direkt zu der im ersten Reaktionsschritt erhaltenen Reaktionslösung nach dem Abdestillieren des Reaktionswassers bei Rückflußtemperatur zugegeben. Das Reaktionsgemisch wird weitere 0,5 bis 3 Stunden, vorzugsweise 1 bis 2 Stunden auf Rückflußtemperatur gehalten und erneut das bei der Reaktion entstehende Wasser abgezogen.
Anschließend wird das so hergestellte Polyesterimid durch übliche Methoden, wie etwa Ausfällen oder Auskristallisieren, isoliert.

Die so hergestellten thermoplastischen Polyesterimide zeichnen sich durch gegenüber dem Stand der Technik verbesserten mechanischen Eigenschaften wie z.B. verbesserte Zugfestigkeit, E-Modul oder Dehnbarkeit aus.
Weiters weisen sie ein zur Verarbeitung vorteilhafteres Temperaturintervall zwischen Glas- und Zersetzungstemperatur und hohe Thermostabilitäten auf.
Aufgrund dieser vorteilhaften Eigenschaften eignen sich die erfindungsgemäßen Polyesterimide zur Herstellung technischer Kunststoffteile z.B. für die Elektro- oder elektronischen Industrie oder für die Autoindustrie, beispielsweise zur Herstellung von Isolierfolien für Draht- und Motorenwicklungen, von Leiterplatten oder von Spulkernen für Elektromotoren.

### Beispiel 1

### Herstellung eines Polyesterimides I mit 2,4-Tolylendiamin

In einem 500 ml Kolben wurden 12,2 g (0,1 mol) 2,4-Tolylendiamin und 42 g (0,2 mol) Trimellitsäureanhydrid in 100 ml DMF eine Stunde auf Rückflußtemperatur erhitzt und das dabei freiwerdende Wasser abdestilliert.
Anschließend wurden der Reaktionslösung 22,8 g (0,1 mol) Propandiphenol zugegebenen, eine weitere Stunde auf Rückflußtemperatur gehalten und wiederum das entstehende Wasser abdestilliert. Das Reaktionsgemisch wurde dann in 1 l Wasser gegossen und das Polyesterimid abfiltriert.
Analog Beispiel 1 wurden ein Polyesterimid II mit 2,6-Tolylendiamin, ein Polyesterimid III mit 1,4-Bis(4-aminophenylthio)diphenylsulfon und ein Polyesterimid IV mit 2,5-Bis(4-aminophenylthio)-thiadiazol hergestellt.

In Tabelle 1 sind die mechanischen Eigenschaften wie Folienbeschaffenheit, E-Modul, Zugfestigkeit (ZF) und Dehnung (D), die inhärente Viskosität (i.V.), der Glaspunkt (Tg) und die Thermostabilität (Tz) der Polyesterimide I bis IV im Vergleich zu einem Polyesterimid mit p-Phenylendiamin (Loncrini, J.Polymer Sci. Part A-1, Vol. 4, S. 1531 bis 1541, (1966)) dargestellt.

**Tabelle 1**

| **Polyesterimid** | **Tg (°C)** | **i.V. (dl/g)** | **Folie** | **ZF 20°C** | **(MPa) 200°C** |
|---|---|---|---|---|---|
| I | 280 | 0,98 | flexibel | 100 | 55 |
| II | 275 | 1,21 | flexibel | 110 | 65 |
| III | 290 | 0,91 | flexibel | 110 | 60 |
| IV | 330 | 0,71 | flexibel | 120 | 70 |
| Vgl. | >500 | 1,03 | flexibel | 60 | 35 |

| **Polyesterimid** | **E-Modul 20°C** | **(MPa) 200°C** | **D (%) 20°C** | **200°C** | **Tz (°C)** |
|---|---|---|---|---|---|
| I | 3300 | 1520 | 6 | 15 | >500 |
| II | 3500 | 1700 | 8 | 16 | >500 |
| III | 3500 | 1600 | 8 | 13 | >500 |
| IV | 3400 | 1650 | 7 | 12 | >500 |
| Vgl | 2300 | 1000 | 5 | 8 | >500 |

## Patentansprüche

1. Thermoplastische Polyesterimide mit verbesserten mechanischen Eigenschaften, dadurch gekennzeichnet, daß sie aus sich wiederholenden Einheiten der Formel I 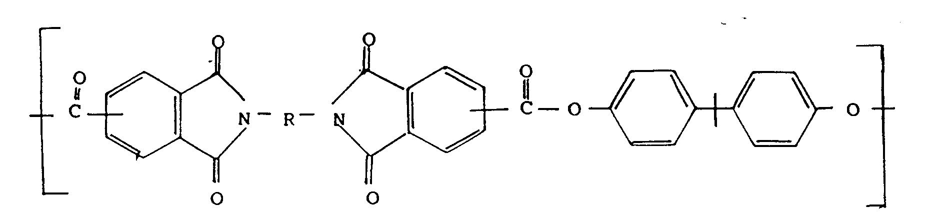 bestehen, worin R einen 2,4-Tolylen-, 2,6-Tolylen-, 2,5-Bis(4-phenylenthio)-thiadiazol- oder einen 1,4-Bis(phenylenthio)di-phenylsulfonrest bedeutet.

2. Thermoplastische Polyesterimide nach Anspruch 1, dadurch gekennzeichnet, daß R einen 2,4-Tolylen- oder 2,6-Tolylenrest bedeutet.

3. Thermoplastische Polyesterimide nach Anspruch 1, dadurch gekennzeichnet, daß R einen 2,5-Bis(4-phenylenthio)-thiadiazol- oder 1,4-Bis(4-phenylenthio)diphenylsulfonrest bedeutet.

4. Verfahren zur Herstellung von thermoplastischen Polyesterimiden der Formel I 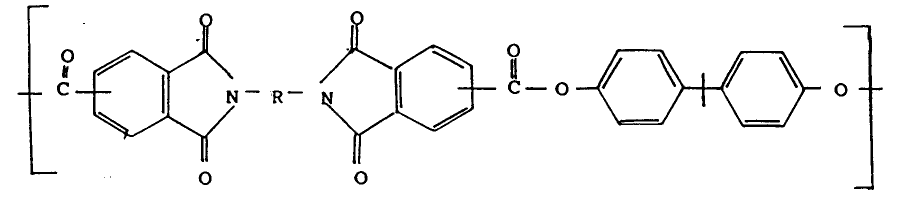 in der R wie in Anspruch 1 definiert ist, dadurch gekennzeichnet, daß Trimellitsäure bzw. Trimellitsäureanhydrid, -anhydridchlorid, anhydridester oder Trimellitsäureester in einem unter den Reaktionsbedingungen inerten Verdünnungsmittel mit 2,4- oder 2,6-Tolylendiamin, 2,5-Bis(4-aminophenylthio)-thiadiazol oder 1,4-Bis(4-amino-phenylthio)diphenylsulfon unter Wasserabspaltung zu einer Diimiddicarbonsäure der Formel II 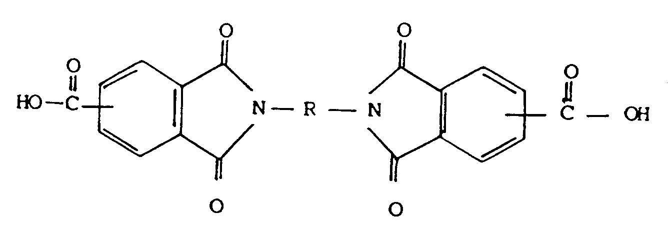 in der R wie in Anspruch 1 definiert ist umgesetzt wird, und anschließend die Diimiddicarbonsäure durch Reaktion mit Propandiphenol, gegebenenfalls in Gegenwart eines Katalysators, unter Wasserabspaltung in ein thermoplastisches Polyesterimid überführt wird.

5. Verwendung von thermoplastischen Polyesterimiden nach Anspruch 1 zur Herstellung von technischen Kunststoffteilen.
